# EUROPÄISCHE PATENTSCHRIFT

(11) **EP 3 330 550 B1**
(45) Veröffentlichungstag und Bekanntmachung des Hinweises auf die Patenterteilung: **28.07.2021**
(21) Anmeldenummer: 17204549.4
(22) Anmeldetag: 30.11.2017
(51) Int. Cl.: F16B 13/06

(54) **VERFAHREN ZUM SETZEN EINES ANKERS IN EINEM ANKERLOCH IN EINEM ANKERGRUND**
METHOD FOR SETTING AN ANCHOR IN AN ANCHOR HOLE IN AN ANCHORING BASE
PROCÉDÉ DE RÉGLAGE D'UN ANCRAGE DANS UN TROU D'ANCRAGE DANS UNE BASE D'ANCRAGE

(30) Priorität: 05.12.2016 DE 102016123500
(43) Veröffentlichungstag der Anmeldung: 06.06.2018
(73) Patentinhaber: fischerwerke GmbH & Co. KG, 72178 Waldachtal (DE)
(72) Erfinder: Kaupp, Andreas, 72280 Dornstetten (DE)
(74) Vertreter: Suchy, Ulrich Johannes

(56) Entgegenhaltungen:
- EP-A1- 0 599 026
- CH-A- 554 498
- DE-A1- 2 622 114

## Beschreibung

Die Erfindung betrifft ein Verfahren zum Setzen eines Ankers in einem Ankerloch in einem Ankergrund mit den Merkmalen des Oberbegriffs des Anspruchs 1. Die Erfindung ist insbesondere auf das Setzen eines sogenannten Bolzenankers gerichtet, auf den beispielsweise aus ästhetischen Gründen und/oder zur Minderung einer Verletzungsgefahr eine Hutmutter geschraubt wird, deren Sackloch eine Einschraubtiefe in die Hutmutter begrenzt. "Setzen" bedeutet ein Einbringen des Ankers in ein Ankerloch in einem Ankergrund. Eine Verankerung, das heißt eine Befestigung des Ankers im Ankerloch, gehört an sich zum Setzen, ist allerdings nicht zwingender Bestandteil der Erfindung. Als Bolzenanker im Sinne des Patents wird ein Anker mit einem Ankerschaft bezeichnet, der einen mit dem Ankerschaft starren, insbesondere einstückigen Spreizkörper, typischerweise einen Spreizkonus (tatsächlich ein Kegelstumpf) aufweist. Auf dem Ankerschaft ist eine Spreizhülse angeordnet, die zu einer Verankerung im Ankerloch durch Einziehen des Spreizkörpers in die Spreizhülse aufspreizbar ist. Zum Aufspreizen ist die Spreizhülse typischerweise ein- oder mehrfach in ihrer Längsrichtung geschlitzt. Das Einziehen des Spreizkörpers in die Spreizhülse erfolgt durch Zug an einem Befestigungsgewinde des Ankerschafts, das aus dem Ankerloch vorsteht, wobei der Ankerschaft zusammen mit dem Spreizkörper axial in Bezug auf die Spreizhülse bewegt wird, die von einer Wand des Ankerlochs, an der sie anliegt, rückgehalten wird. Typischerweise befindet sich das Befestigungsgewinde an einem und der Spreizkörper an einem anderen Ende des Ankerschafts, was allerdings nicht zwingend für die Erfindung ist. Ein Bolzenanker ist bekannt aus der Patentanmeldung EP 0 599 026 A1, wobei hierbei eine herkömmliche Mutter und keine Hutmutter auf ein Befestigungsgewinde des Ankers geschraubt ist. Auch die Patentschrift CH 554 498 zeigt einen derartigen Anker.

Ein Anker mit einer Hutmutter ist aus der Offenlegungsschrift DE 26 22 114 bekannt. Bei diesem Anker wird eine Hutmutter verwendet, um den Weg des Ankerschafts beim Aufspreizen zu kontrollieren und zu begrenzen.

Aufgabe der Erfindung ist, ein Verfahren zum Setzen eines Ankers der vorstehend erläuterten Art vorzuschlagen.

Diese Aufgabe wird erfindungsgemäß durch die Merkmale des Anspruchs 1 gelöst. Das erfindungsgemäße Verfahren mit den Merkmalen des Anspruchs 1 ist auf das Setzen eines Ankers in einem Ankerloch in einem Ankergrund gerichtet. Der Anker weist einen Ankerschaft, ein Befestigungsgewinde, einen Spreizkörper und eine Spreizhülse auf. Das Befestigungsgewinde dient einer Befestigung eines Anbauteils am Anker. Vorzugsweise, allerdings nicht zwingend, sind das Befestigungsgewinde an einem und/oder der Spreizkörper an einem anderen Ende des Ankerschafts angeordnet. Als "Anbauteil" wird ein Bauteil, Gegenstand oder dergleichen bezeichnet, das mit dem Anker an dem Ankergrund befestigt werden soll. Zur Befestigung weist das Anbauteil typischerweise ein Durchgangsloch auf, mit dem das Anbauteil auf den Ankerschaft aufgesetzt wird. Der Spreizkörper ist starr mit dem Ankerschaft verbunden, insbesondere ist der Spreizkörper einstückig mit dem Ankerschaft hergestellt. Er dient einem Aufspreizen der Spreizhülse, die axial beweglich auf dem Ankerschaft angeordnet ist. Zum Aufspreizen der Spreizhülse wird der Spreizkörper in die Spreizhülse eingezogen, wozu ein Zug beispielsweise durch Drehen einer auf das Befestigungsgewinde geschraubten Mutter über den Ankerschaft auf den Spreizkörper ausgeübt wird, der dadurch in die Spreizhülse eingezogen wird. "Zug" bedeutet eine auf den Ankerschaft ausgeübte Axialkraft, die den Spreizkörper in die Spreizhülse einzieht. Wenn der Anker in das Ankerloch eingebracht ist, liegt die Spreizhülse an einer Wand des Ankerlochs an und wird beim Einziehen des Spreizkörpers in die Spreizhülse vom Ankerloch rückgehalten. Der Spreizkörper hat insbesondere die Form eines Kegelstumpfs und kann in diesem Fall als Spreizkonus bezeichnet werden. Andere Formen, beispielsweise ein Pyramidenstumpf, ein Keil oder eine Stufe sind ebenfalls als Spreizkörper denkbar, wobei die Aufzählung beispielhaft und nicht abschließend ist. Durch das Aufspreizen der Spreizhülse, das auch als Aufspreizen des Ankers aufgefasst werden kann, wird der Anker im Ankerloch verankert, das heißt befestigt. Die Verankerung kann durch Kraftschluss und/oder Formschluss der Spreizhülse im Ankerloch erfolgen. Erfindungsgemäß wird der Anker ohne eine auf das Befestigungsgewinde geschraubte Mutter so in ein Ankerloch eingebracht, dass sich der Spreizkörper und die Spreizhülse in dem Ankerloch befinden. Der Ankerschaft befindet sich so tief im Ankerloch, dass das Befestigungsgewinde um einen Überstand aus dem Ankerloch vorsteht. Das Befestigungsgewinde kann vollständig aus dem Ankerloch vorstehen oder sich ein Stück weit in das Ankerloch erstrecken. Der Überstand ist ein Abstand eines dem Ankergrund fernen Endes des Befestigungsgewindes vom Ankergrund. Der Überstand des Befestigungsgewindes aus dem Ankerloch wird anhand einer Dicke eines Anbauteils, das mit dem Anker am Ankergrund befestigt werden soll, einer Dicke eines oder mehrerer weiterer, außerhalb des Ankergrundes auf den Ankerschaft aufzusetzender Teile und einer Tiefe eines Sacklochs einer Hutmutter, die zur Befestigung des Anbauteils am Ankerschaft auf das Befestigungsgewinde des Ankerschafts geschraubt werden soll, und einer Spreizlänge zum Aufspreizen der Spreizhülse festgelegt. Als Dicke des Anbauteils ist eine Dicke in einem den Ankerschaft umgebenden Bereich zu wählen, wenn das Anbauteil mit dem Anker am Ankergrund befestigt ist, oder, beispielsweise bei einer Hohllage zwischen Anbauteil und Ankergrund, ein Abstand einer dem Ankergrund abgewandten Fläche des Anbauteils, an der die Mutter anliegt, wenn sie auf das Befestigungsgewinde des Ankerschafts geschraubt ist, vom Ankergrund. Etwaige weitere, auf den Ankerschaft aufgesetzte oder aufzusetzen Teile, sind insbesondere eine Unterlegscheibe.

Der Überstand des Befestigungsgewindes des Ankerschafts aus dem Ankerloch ist mindestens so groß, dass ein Mutterngewinde der auf das Befestigungsgewinde des Ankerschafts zu schraubenden Hutmutter mit dem Befestigungsgewinde in Eingriff gelangt, wenn nach dem Einbringen des Ankers in das Ankerloch das Anbauteil und ein oder mehrere weitere Teile, wie beispielsweise eine Unterlegscheibe, auf den aus dem Ankergrund vorstehenden Ankerschaft mit dem Befestigungsgewinde aufgesetzt und in Anlage an den Ankergrund bzw. aneinander gebracht worden sind. Die Hutmutter wird dann auf das Befestigungsgewinde des Ankerschafts aufgesetzt, so dass anschließend durch Drehen der Hutmutter eine Zugkraft über den Ankerschaft auf den Spreizkörper ausgeübt werden kann, die den Spreizkörper in die Spreizhülse einzieht. Der Spreizkörper spreizt die Spreizhülse auf, so dass der Anker im Ankerloch verankert, das heißt befestigt ist. Grundsätzlich genügt ein Überstand des Befestigungsgewindes des Ankerschafts über die auf ihn aufgesetzten und am Ankergrund anliegenden Teile von weniger als einem Gewindegang, damit das Mutterngewinde der Hutmutter in Eingriff mit dem Befestigungsgewinde gelangt, weil zu Beginn des Drehens der Hutmutter auf dem Befestigungsgewinde die Zugkraft klein ist.

Der größte Überstand des Befestigungsgewindes aus dem Ankerloch ist die Dicke des Anbauteils, zuzüglich der Dicke/n eines oder mehrerer etwaiger weiterer, auf den Ankerschaft aufzusetzender Teile und zuzüglich einer Tiefe eines Sacklochs der auf das Befestigungsgewinde zu schraubenden Hutmutter, abzüglich einer notwendigen Spreizlänge zum Aufspreizen der Spreizhülse: Am Ende eines Festziehens der Hutmutter darf ein aus dem Ankerloch vorstehendes Ende des Ankerschafts höchstens an einem Grund des Sacklochs der Hutmutter anliegen. Es kann auch ein Abstand zwischen dem Ende des Ankerschafts und dem Grund des Sacklochs der Hutmutter vorhanden sein, wenn die Hutmutter auf dem Befestigungsgewinde des Ankerschafts festgezogen ist. Das aus dem Ankerloch vorstehende Ende des Ankerschafts befindet sich in der Hutmutter. Sofern das Befestigungsgewinde nicht bis zum Ende des Ankerschafts reicht, bestimmt das aus dem Ankergrund vorstehende Ende des Ankerschafts anstelle des Befestigungsgewindes den größten Überstand des Befestigungsgewindes des Ankerschafts aus dem Ankerloch beim Setzen des Ankers. Die Spreizlänge ist ein axialer Weg des Spreizkörpers in Bezug zur Spreizhülse, der zum Aufspreizen der Spreizhülse notwendig ist.

Der Überstand des Befestigungsgewindes des Ankerschafts aus dem Ankergrund beim Setzen des Ankers wird also anhand der Dicke von Teilen, nämlich des Anbauteils und etwaiger weiterer Teile, beispielsweise einer Unterlegscheibe festgelegt, die nach dem Setzen des Ankers auf den aus dem Ankerloch vorstehenden Ankerschaft mit dem Befestigungsgewinde aufgesetzt und durch Schrauben der Hutmutter auf das Befestigungsgewinde und Festziehen der Hutmutter gegen den Ankergrund gespannt werden. Ein größter Überstand des Befestigungsgewindes aus dem Ankerloch wird zusätzlich durch die Spreizlänge, die zum Aufspreizen der Spreizhülse notwendig ist, und die Tiefe des Sacklochs der Hutmutter begrenzt.

Die Erfindung sieht ein Setzwerkzeug vor, das eine Anlage aufweist, mit der es beim Setzen des Ankers neben dem Ankerloch in Anlage am Ankergrund gebracht wird. Die Anlage des Setzwerkzeugs ist eine Fläche oder eine Stelle zum Anlegen an den Ankergrund. Das Setzwerkzeug kann auch ein Loch aufweisen und das aus dem Ankergrund vorstehende Befestigungsgewinde umschließen. Des Weiteren weist das Setzwerkzeug ein Widerlager in einem dem festgelegten Überstand, den das Befestigungsgewinde des Ankerschafts am Ende des Setzens des Ankers aus dem Ankerloch aufweisen soll, entsprechenden Abstand von der Anlage auf. Das Einbringen des Ankers in das Ankerloch wird bzw. ist beendet, wenn ein Einbringwerkzeug am Widerlager des Setzwerkzeugs zur Anlage gelangt. Beispielsweise trifft ein Hammer als Einbringwerkzeug, mit dem der Anker in das Ankerloch geschlagen wird, gegen das Widerlager des Setzwerkzeugs. Oder der Anker wird mit dem Setzwerkzeug in das Ankerloch eingebracht. In diesem Fall liegt das aus dem Ankerloch vorstehende Ende des Ankerschafts am Widerlager des Setzwerkzeugs an und das Einbringen des Ankers in das Ankerloch ist beendet, wenn die Anlage des Setzwerkzeugs am Ankergrund anliegt. Das Setzwerkzeug kann auch eine Lehre sein, deren Widerlager den Überstand des Befestigungsgewindes des Ankerschafts aus dem Ankergrund anzeigt, wenn das Setzwerkzeug mit seiner Anlage am Ankergrund anliegt. Das Widerlager wird in diesem Fall treffender als Messfläche oder ähnlich bezeichnet.

Beispielsweise ist das Setzwerkzeug ein Ring oder weist jedenfalls ein Durchgangsloch auf und wird beim Einbringen des Ankers in das Ankerloch auf den Ankerschaft mit dem Befestigungsgewinde aufgesetzt. Eine dem Ankergrund zugewandte Stirnfläche oder Lochrand bildet die Anlage und eine dem Ankergrund abgewandte Stirnfläche oder Lochrand das Widerlager des das Setzwerkzeug bildenden Rings.

Eine Ausgestaltung der Erfindung sieht vor, dass das Setzwerkzeug stabförmig ist und eine Ansenkung in einem Stirnende aufweist. Ein Durchmesser bzw. ein Querschnitt der Ansenkung ist mindestens so groß wie ein Außendurchmesser des Befestigungsgewindes des Ankerschafts, so dass das Setzwerkzeug mit seiner Ansenkung auf das Befestigungsgewinde des Ankerschafts aufgesetzt und der Anker mit dem Setzwerkzeug in das Ankerloch eingebracht werden kann. Die Ansenkung im Setzwerkzeug ist so tief wie der Überstand des Befestigungsgewindes des Ankerschafts aus dem Ankerloch und legt den Überstand beim Einbringen des Ankers in das Ankerloch fest. Ein Grund der Ansenkung im Stirnende des stabförmigen Setzwerkzeugs bildet das Widerlager und eine eine Mündung der Ansenkung umschließende Stirnfläche die Anlage des Setzwerkzeugs.

Die Erfindung wird nachfolgend anhand der Zeichnung erläutert. Es zeigen:
- Figur 1: einen erfindungsgemäß mit Überstand gesetzten Anker;
- Figur 2: ein mit dem Anker aus Figur 1 an einem Ankergrund befestigtes Anbauteil; und
- Figuren 3 und 4: ein erfindungsgemäßes Setzen des Ankers mit Überstand mit Setzwerkzeugen.

Der in der Zeichnung dargestellte Anker 1 ist ein so genannter Bolzenanker mit einem stangenförmigen Ankerschaft 2, der einen Spreizkörper 3 an einem und ein Befestigungsgewinde 4 an einem anderen Ende aufweist. Der Spreizkörper 3 ist starr mit dem Ankerschaft 2 verbunden, im Ausführungsbeispiel ist er einstückig mit dem Ankerschaft 2 hergestellt. Im Ausführungsbeispiel ist der Spreizkörper 3 kegelstumpfförmig und kann deswegen auch als Spreizkonus aufgefasst werden. Das Befestigungsgewinde 4 kann bis zum Ende des Ankerschafts 2 reichen, im Ausführungsbeispiel endet es kurz vor dem Ende des Ankerschafts 2 und der Ankerschaft 2 weist einen kurzen und gewindelosen Einschlagzapfen 23 an seinem Ende auf, dessen Durchmesser nicht größer als ein Kerndurchmesser des Befestigungsgewindes 4 ist.

Auf dem Ankerschaft 2 ist eine Spreizhülse 5 angeordnet, die auf dem Ankerschaft 2 verschieblich ist und die ein Stück weit auf den Spreizkörper 3 reicht. Die Spreizhülse 5 weist eine Anzahl Längsschlitze 6 auf, die an einem dem Spreizkörper 3 zugewandten Ende offen sind, so dass die Spreizhülse 6 durch Einziehen des Spreizkörpers 3 aufspreizbar ist. Bei einem Einbringen in ein zylindrisches Sackloch als Ankerloch 7 in einem Ankergrund 8 aus beispielsweise Stein, Mauerwerk oder Beton stützt sich die Spreizhülse 6 axial an einer Ringstufe 9 des Ankerschafts 2 als Widerlager ab.

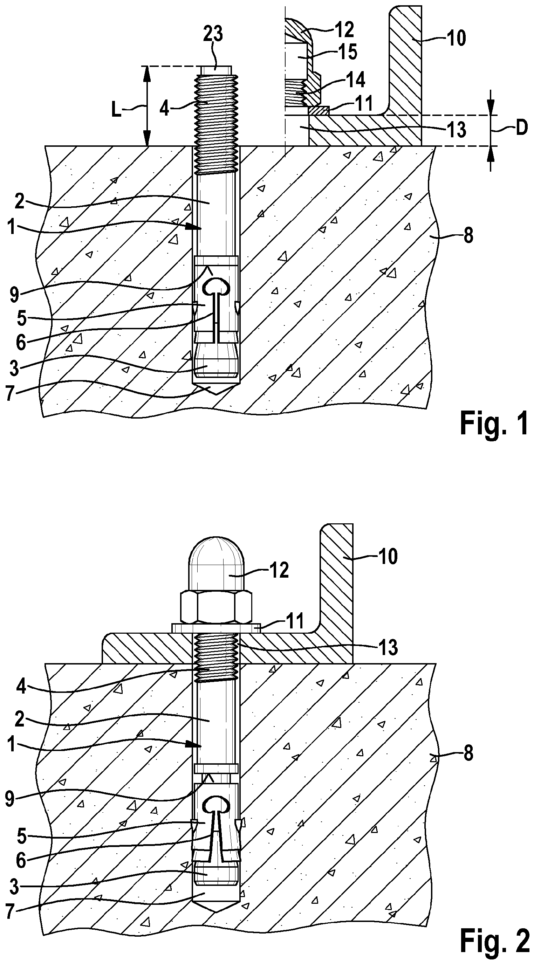

Erfindungsgemäß wird der Anker 1 mit seinem Spreizkörper 3 voraus in das Ankerloch 7 eingebracht, so dass sich - wie in Figur 1 zu sehen - der Spreizkörper 3 und die Spreizhülse 5 vollständig und der Ankerschaft 2 teilweise im Ankerloch 7 befinden. Beim Einbringen in das Ankerloch 7 befindet sich keine Mutter auf dem Befestigungsgewinde 4 des Ankerschafts 2. Der Anker 1 wird so tief in das Ankerloch 7 eingebracht, dass das Befestigungsgewinde 4 vollständig oder teilweise aus dem Ankerloch 7 vorsteht. Ein Überstand L des Ankerschafts 2 aus dem Ankerloch 7 ist festgelegt durch ein Anbauteil 10 und sofern vorhanden eine Unterlegscheibe 11, sowie durch eine Hutmutter 12. Allgemein ist das Anbauteil 10 ein mit dem Anker 1 am Ankergrund 8 zu befestigender Gegenstand. Im Ausführungsbeispiel ist das Anbauteil 10 eine Konsole mit einem Durchgangsloch 13 für den Ankerschaft 2. Die Unterlegscheibe 11 kann allgemein auch als weiteres, auf den Ankerschaft 2 aufzusetzendes oder aufgesetztes Teil aufgefasst werden, das wie erwähnt nicht vorhanden sein muss.

Ist der Anker 1 erfindungsgemäß mit festgelegtem Überstand L in das Ankerloch 7 eingebracht und das Anbauteil 10 mit seinem Durchgangsloch 13 und die Unterlegscheibe 11 auf den Ankerschaft 2 aufgesetzt, so dass das Anbauteil 10 am Ankergrund 8 und die Unterlegscheibe 11 am Anbauteil 10 anliegen, steht der Ankerschaft 2 mindestens so weit aus dem Anbauteil 10 und der Unterlegscheibe 11 vor, dass ein Mutterngewinde 14 der Hutmutter 12 in Eingriff mit dem Befestigungsgewinde 4 des Ankerschafts 2 gelangt, wenn die Hutmutter 12 von Hand aufgesetzt wird. Es genügt eine Überdeckung von einem Gewindegang oder nur einem Bruchteil eines Gewindegangs, weil eine zum Einziehen des Spreizkörpers 3 in die Spreizhülse 5 notwendige Zugkraft zu Beginn niedrig ist. Der Überstand L des Ankerschafts 2 am Ende des Einbringens des Ankers 1 in das Ankerloch 7 ist also mindestens so groß wie eine Dicke D des Anbauteils 10 in einem Bereich, in dem das Anbauteil 10 den Ankerschaft 2 umgibt, wenn es auf den Ankerschaft 2 aufgesetzt ist, zuzüglich einer Dicke der Unterlegscheibe 11 und zuzüglich eines für den Eingriff des Mutterngewindes 14 am Befestigungsgewinde 4 notwendigen Überstands.

Am Ende des Einbringens des Ankers 1 in das Ankerloch 7 ist der Überstand L des Ankerschafts 2 aus dem Ankerloch 7 höchstens so groß, dass eine zum Aufspreizen der Spreizhülse 5 notwendige Spreizlänge in einem Sackloch 15 der Hutmutter 12 zur Verfügung steht. Die Spreizlänge ist ein axialer Weg des Ankerschafts 2 zusammen mit dem Spreizkörper 3 in Bezug zur Spreizhülse 5, der zum Einziehen des Spreizkörpers 3 in die und zum Aufspreizen der Spreizhülse 5 notwendig ist. Beim Einziehen des Spreizkörpers 3 wird die Spreizhülse 5 von einer Wand des Ankerlochs 7, an der sie anliegt, rückgehalten. Der Überstand L des Ankerschafts 2 am Ende des Einbringens des Ankers 1 in das Ankerloch 7 ist also nicht größer als die Dicke D des Anbauteils 10 in dem Bereich, in dem das Anbauteil 10 den Ankerschaft 2 umgibt, wenn es auf den Ankerschaft 2 aufgesetzt ist, zuzüglich der Dicke der Unterlegscheibe 11 und zuzüglich der Tiefe des Sacklochs 15 der Hutmutter 12 abzüglich der Spreizlänge.

Zur Veranschaulichung sind in Figur 1 Hälften der Hutmutter 12 und Unterlegscheibe 11 und das Anbauteil 10 bis zu einer Hälfte seines Durchgangslochs 13 am Ankergrund 8 anliegend neben dem aus dem Ankerloch 7 vorstehenden Ankerschaft 2 gezeichnet. Figur 1 zeigt etwa den maximal möglichen Überstand L des Ankerschafts 2 aus dem Ankerloch 7. Der minimale Überstand L ergibt sich wie erwähnt aus einer Überdeckung des Mutterngewindes 14 und des Befestigungsgewindes 4 von einem Gewindegang oder weniger.

Figur 2 zeigt das mit dem Anker 1 am Ankergrund 8 befestigte Anbauteil 10. Durch Schrauben der Hutmutter 12 auf das Befestigungsgewinde 4 des Ankerschafts 2 und Festziehen der Hutmutter 12 ist der Spreizkörper 3 in die Spreizhülse 5 eingezogen und die Spreizhülse 5 aufgespreizt, so dass sie den Anker 1 im Ankergrund 8 verankert, das heißt festlegt. Die Verankerung kann durch Kraftschluss und/oder Formschluss erfolgen. Außerdem spannt die Hutmutter 12 des erfindungsgemäßen Ankers 1 das Anbauteil 10 gegen den Ankergrund 8.

Gemäß der Erfindung ist die Hutmutter 12 in axialer Richtung höher und ihr Sackloch 15 tiefer als eine Sechskant-Hutmutter, hohe Form gemäß DIN 1587, Stand Oktober 2000, wobei die Hutmutter 12 zwar im Ausführungsbeispiel eine Sechskantmutter ist, jedoch keine Sechskantmutter sein muss. Das Sackloch 15 der Hutmutter 12, einschließlich einer axialen Höhe des Mutterngewindes 14, ist mindestens um 50 % tiefer als ein Nenndurchmesser des Mutterngewindes 14. Im Ausführungsbeispiel der Erfindung weist das Sackloch 15 der Hutmutter 12 einschließlich der axialen Höhe des Mutterngewindes 14 eine Tiefe von mindestens 18 mm bei einem Gewindenenndurchmesser M10, von mindestens 24 mm bei einem Gewindenenndurchmesser M12 und von mindestens 27 mm bei einem Gewindenenndurchmesser M16 auf.

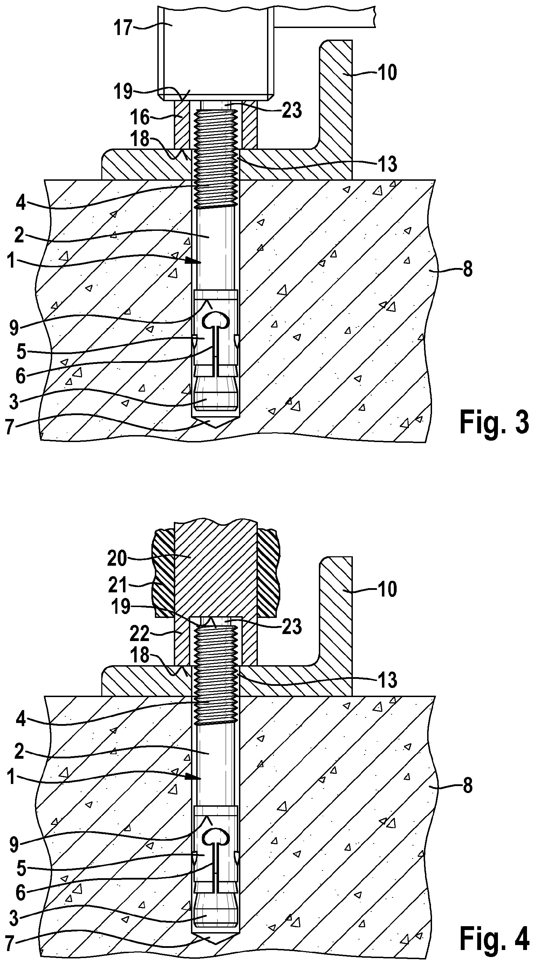

Figur 3 zeigt einen rohrförmigen Ring als Setzwerkzeug 16 zum Einbringen des Ankers 1 in das Ankerloch 7. Der Anker 1 wird mit einem Hammer 17 als Einbringwerkzeug in das Ankerloch 7 eingeschlagen, wobei das Anbauteil 10 und das Setzwerkzeug 16 auf den Ankerschaft 2 aufgesetzt sind. Das Setzwerkzeug 16 liegt am Anbauteil 10 und das Anbauteil 10 am Ankergrund 8 an, begrenzt eine Einschlagtiefe des Ankers 1 in das Ankerloch 7 und legt dadurch den Überstand L des Ankerschafts 2 aus dem Ankerloch 7 fest. Eine am Anbauteil 10 anliegende Stirnfläche des Setzwerkzeugs 16 bildet eine Anlage 18. Eine andere gegenüberliegende Stirnfläche, gegen die der Hammer 17 geschlagen wird, bildet ein Widerlager 19.

Figur 4 zeigt ein anderes, stabförmiges Setzwerkzeug 20, das mit einem Handgriff 21 aus Kunststoff ummantelt ist. Dieses stabförmige Setzwerkzeug 20 weist eine zylindrische Ansenkung 22 in einem Stirnende auf, deren Durchmesser größer als ein Außendurchmesser des Befestigungsgewindes 4 ist. Das stabförmige Setzwerkzeug 20 wird mit seiner Ansenkung 22 auf das Ende des Ankerschafts 2 aufgesetzt und der Anker 1 mit beispielsweise einem nicht gezeichneten Hammer und dem stabförmigen Setzwerkzeug 20 in das Ankerloch 7 eingeschlagen. Dabei ist das Anbauteil 10 mit seinem Durchgangsloch 13 auf den Ankerschaft 2 aufgesetzt. Sobald das stabförmige Setzwerkzeug 20 auf dem Anbauteil 10 aufsitzt und das Anbauteil 10 am Ankergrund 8 anliegt, ist das Einschlagen beendet und der Ankerschaft 2 steht mit dem festgelegten Überstand L aus dem Ankerloch 7 vor. Eine am Anbauteil 10 zur Anlage kommende Stirnfläche des stabförmigen Setzwerkzeugs 20 bildet eine Anlage 18. Ein Grund der Ansenkung 22, der beim Einschlagen des Ankers 1 in das Ankerloch 7 auf dem Ende des Ankerschafts 2 aufsitzt, bildet ein Widerlager 19 des stabförmigen Setzwerkzeugs 20.

### Bezuqszeichenliste

### Verfahren zum Setzen eines Ankers in einem Ankerloch in einem Ankergrund und Anker zum Setzen mit dem Verfahren

D Dicke
L Überstand
1 Anker
2 Ankerschaft
3 Spreizkörper
4 Befestigungsgewinde
5 Spreizhülse
6 Längsschlitz
7 Ankerloch
8 Ankergrund
9 Ringstufe
10 Anbauteil
11 Unterlegscheibe
12 Hutmutter
13 Durchgangsloch
14 Mutterngewinde
15 Sackloch
16 Setzwerkzeug
17 Hammer
18 Anlage
19 Widerlager
20 Stabförmiges Setzwerkzeug
21 Handgriff
22 Ansenkung
23 Einschlagzapfen

## Patentansprüche

1. Verfahren zum Setzen eines Ankers (1) in einem Ankerloch (7) in einem Ankergrund (8), wobei der Anker (1) einen Ankerschaft (2) mit einem Befestigungsgewinde (4) zu einer Befestigung eines Anbauteils (10) am Anker (1), einen starr am Ankerschaft (2) angeordneten Spreizkörper (3) und eine auf dem Ankerschaft (2) axial bewegliche Spreizhülse (5), die durch Einziehen des Spreizkörpers (3) durch Zug am Befestigungsgewinde (4), der durch den Ankerschaft (2) auf den Spreizkörper (3) übertragen wird, wobei der Ankerschaft (2) gemeinsam mit dem Speizkörper (3) axial gegenüber der Spreizhülse (5) bewegt wird, aufspreizbar ist, aufweist, wobei der Anker (1) ohne eine auf sein Befestigungsgewinde (4) geschraubte Mutter mit seinem Befestigungsgewinde (4) um einen festgelegten Überstand (L) aus dem Ankergrund (8) vorstehend in das Ankerloch (7) eingebracht wird, wobei der Überstand (L) anhand einer Dicke (D) eines Anbauteils (10) in einem bei mit dem Anker (1) am Ankergrund (8) befestigten Anbauteil (10) den Ankerschaft (2) umgebenden Bereich, einer Dicke/n etwaiger weiterer auf den Ankerschaft (2) aufzusetzender oder aufgesetzter Teile (11), einer Tiefe eines Sacklochs (15) einer auf das Befestigungsgewinde (4) aufzuschraubenden Hutmutter (12) und einer Spreizlänge zum Aufspreizen der Spreizhülse (5) festgelegt wird, **gekennzeichnet durch** ein Setzwerkzeug (16; 20), das eine Anlage (18), die beim Einbringen des Ankers (1) in das Ankerloch (7) im Ankergrund (8) neben dem Ankerloch (7) in Anlage an den Ankergrund (8), an ein mit dem Anker (1) zu befestigendes, am Ankergrund (8) anliegendes Anbauteil (10) oder ein oder mehrere etwaige weitere auf den Ankerschaft (2) aufgesetzte Teile (11) gebracht wird, und ein Widerlager (19) in einem dem Überstand (L) entsprechenden Abstand von der Anlage (18), aufweist.

2. Verfahren nach Anspruch 1, **dadurch gekennzeichnet, dass** der Überstand (L) des Befestigungsgewindes (4) des Ankerschafts (2) aus dem Ankergrund (8) mindestens so groß wie die Dicke (D) eines Anbauteils (10) in einem bei mit dem Anker (1) am Ankergrund (8) befestigten Anbauteil (10) den Ankerschaft (2) umgebenden Bereich und die Dicke/n etwaiger weiterer auf den Ankerschaft (2) aufzusetzender oder aufgesetzter Teile (11) zuzüglich einer für einen Gewindeeingriff eines Mutterngewindes (14) einer Hutmutter (12) mit dem Befestigungsgewinde (4) des Ankerschafts (2) notwendigen Überstands ist.

3. Verfahren nach Anspruch 1 oder 2, **dadurch gekennzeichnet, dass** der Überstand (L) eines aus dem Ankerloch (7) vorstehenden Endes des Ankerschafts (2) aus dem Ankergrund (8) nicht größer ist als die Dicke (D) eines Anbauteils (10) in einem bei mit dem Anker (1) am Ankergrund (8) befestigten Anbauteil (10) den Ankerschaft (2) umgebenden Bereich, zuzüglich der Dicke/n etwaiger weiterer auf den Ankerschaft (2) aufzusetzender oder aufgesetzter Teile (11) und zuzüglich der Tiefe eines Sacklochs (15) einer auf das Befestigungsgewinde (4) des Ankerschafts (2) aufzuschraubenden Hutmutter (12) abzüglich einer zur Verankerung des Ankers (1) notwendigen Spreizlänge.

4. Verfahren nach einem der Ansprüche 1 bis 3, **dadurch gekennzeichnet, dass** das Setzwerkzeug (16) ein Ring ist, dessen eine Stirnfläche die Anlage (18) und dessen andere Stirnfläche das Widerlager (19) ist, und dass der Anker (1) mit einem Einbringwerkzeug (17) in das Ankerloch (7) eingebracht und das Einbringen durch Anlage des Einbringwerkzeugs (17) am Widerlager (19) des Setztwerkzeugs (16), das mit seiner Anlage (18) am Ankergrund (8), an einem Anbauteil (10) oder einem weiteren, auf den Ankerschaft (2) aufgestzten Teil (11) anliegt, beendet wird.

5. Verfahren nach einem der Ansprüche 1 bis 3, **dadurch gekennzeichnet, dass** das Setzwerkzeug (20) stabförmig ist und eine Ansenkung (22) in einem Stirnende aufweist, deren Durchmesser mindestens so groß ist wie ein Außendurchmesser des Befestigungsgewindes (4) des Ankers (1), die so tief ist wie der Überstand (L), um den der Anker (1) beim Setzen aus dem Ankergrund (8) vorsteht, abzüglich der Dicke (D) des Anbauteils (10) in einem den Ankerschaft (2) umgebenden Bereich und abzüglich der Dicke etwaiger weiterer, auf den Ankerschaft (2) aufgesetzter Teile (11), deren Grund das Widerlager (19) für den Anker (1) bildet und dass das die Ansenkung (22) aufweisende Stirnende die Anlage (18) des Setzwerkzeugs (20) bildet.

6. Verfahren nach einem der Ansprüche 1 bis 5, **dadurch gekennzeichnet, dass** der Anker (1) eine auf das Befestigungsgewinde (4) des Ankers (1) aufschraubbare Hutmutter (12) aufweist.

7. Verfahren nach Anspruch 6, **dadurch gekennzeichnet, dass** ein Sackloch (15) der Hutmutter (12) tiefer ist als ein Sackloch einer Sechskant-Hutmutter, hohe Form gemäß DIN 1587.

8. Verfahren nach Anspruch 7, **dadurch gekennzeichnet, dass** ein Sackloch (15) der Hutmutter (12) um mindestens 50%, insbesondere 65% und vorzugsweise 80% tiefer als ein Gewindenenndurchmesser ist.

9. Verfahren nach Anspruch 7, **dadurch gekennzeichnet, dass** ein Sackloch (15) der Hutmutter (12) bei einem Gewindenenndurchmesser M10 mindestens 18 mm, bei einem Gewindenenndurchmesser M12 mindestens 24 mm und bei einem Gewindenenndurchmesser M16 mindestens 27 mm tief ist.

## Claims

1. Method of setting an anchor (1) in an anchoring hole (7) in an anchoring substrate (8), wherein the anchor (1) has an anchor shank (2) with a fixing thread (4) for fixing an add-on part (10) to the anchor (1), an expander body (3) rigidly arranged on the anchor shank (2), and an expansion sleeve (5) axially movable on the anchor shank (2), which expansion sleeve is expansible by the expander body (3) being drawn in by tensile force exerted on the fixing thread (4), which force is transmitted to the expander body (3) by the anchor shank (2), the anchor shank (2) together with the expander body (3) being moved axially with respect to the expansion sleeve (5), wherein the anchor (1), without a nut screwed onto its fixing thread (4), is introduced into the anchoring hole (7) with its fixing thread (4) protruding from the anchoring substrate (8) by a determined protruding length (L), wherein the protruding length (L) is determined on the basis of a thickness (D) of an add-on part (10) in a region surrounding the anchor shank (2) when the add-on part (10) is fixed to the anchoring substrate (8) by means of the anchor (1), a thickness/es of any further part(s) (11) mounted or to be mounted on the anchor shank (2), a depth of a blind hole (15) of a cap nut (12) to be screwed onto the fixing thread (4), and an expansion length for expansion of the expansion sleeve (5), **characterised by** a setting tool (16; 20) having a contact surface (18) which, on introduction of the anchor (1) into the anchoring hole (7) in the anchoring substrate (8), is brought into contact with the anchoring substrate (8) next to the anchoring hole (7), with an add-on part (10) that is in contact with the anchoring substrate (8) and is to be fixed by means of the anchor (1), or with any further part(s) (11) mounted on the anchor shank (2), and having a counter-bearing (19) spaced from the contact surface (18) by a distance that corresponds to the protruding length (L).

2. Method according to claim 1, **characterised in that** the length (L) by which the fixing thread (4) of the anchor shank (2) protrudes from the anchoring substrate (8) is at least as great as the thickness (D) of an add-on part (10) in a region surrounding the anchor shank (2) when the add-on part (10) is fixed to the anchoring substrate (8) by means of the anchor (1), and the thickness/es of any further parts (11) mounted or to be mounted on the anchor shank (2) plus a protruding length necessary for threaded engagement of an internal thread (14) of a cap nut (12) with the fixing thread (4) of the anchor shank (2).

3. Method according to claim 1 or 2, **characterised in that** the length (L) by which an end of the anchor shank (2) protruding from the anchoring hole (7) protrudes from the anchoring substrate (8) is not greater than the thickness (D) of an add-on part (10) in a region surrounding the anchor shank (2) when the add-on part (10) is fixed to the anchoring substrate (8) by means of the anchor (1), plus the thickness/es of any further part(s) (11) mounted or to be mounted on the anchor shank (2) and plus the depth of a blind hole (15) of a cap nut (12) to be screwed onto the fixing thread (4) of the anchor shank (2) minus an expansion length necessary for anchoring the anchor (1).

4. Method according to any one of claims 1 to 3, **characterised in that** the setting tool (16) is a ring, one end face of which is the contact surface (18) and the other end face of which is the counter-bearing (19); and the anchor (1) is introduced into the anchoring hole (7) by means of an introduction tool (17) and introduction is completed by contact of the introduction tool (17) with the counter-bearing (19) of the setting tool (16) which, with its contact surface (18), is in contact with the anchoring substrate (8), with an add-on part (10) or with a further part (11) mounted on the anchor shank (2).

5. Method according to any one of claims 1 to 3, **characterised in that** the setting tool (20) is bar-shaped and has a countersink (22) in a front end, the diameter of which countersink is at least as large as an external diameter of the fixing thread (4) of the anchor (1) and which is as deep as the length (L) by which the anchor (1) protrudes from the anchoring substrate (8) during setting, minus the thickness (D) of the add-on part (10) in a region surrounding the anchor shank (2) and minus the thickness of any further parts (11) mounted on the anchor shank (2), the base of which countersink forms the counter-bearing (19) for the anchor (1); and the front end having the countersink (22) forms the contact surface (18) of the setting tool (20).

6. Method according to any one of claims 1 to 5, **characterised in that** the anchor (1) has a cap nut (12) screwable onto the fixing thread (4) of the anchor (1).

7. Method according to claim 6, **characterised in that** a blind hole (15) of the cap nut (12) is deeper than a blind hole of a hexagonal domed cap nut in accordance with DIN 1587.

8. Method according to claim 7, **characterised in that** a blind hole (15) of the cap nut (12) is at least 50 %, especially 65 % and preferably 80 % deeper than a thread nominal diameter.

9. Method according to claim 7, **characterised in that** a blind hole (15) of the cap nut (12) is at least 18 mm deep in the case of a thread nominal diameter M10, at least 24 mm deep in the case of a thread nominal diameter M12 and at least 27 mm deep in the case of a thread nominal diameter M16.

## Revendications

1. Procédé de pose d'un tirant d'ancrage (1) dans un trou d'ancrage (7) pratiqué dans une base d'ancrage (8), ledit tirant d'ancrage (1) comprenant un fût (2) muni d'un filetage de fixation (4) dévolu à la fixation d'une pièce rapportée (10) audit tirant d'ancrage (1), un corps d'écartement (3) implanté rigidement sur le fût (2) dudit tirant d'ancrage, et une douille expansible (5) mobile axialement sur ledit fût (2) du tirant d'ancrage et pouvant être déployée par enfoncement du corps d'écartement (3) sous l'effet d'une traction exercée sur le filetage de fixation (4) et répercutée sur ledit corps d'écartement (3) par l'intermédiaire dudit fût (2) du tirant d'ancrage, lequel fût (2) du tirant d'ancrage est mû axialement par rapport à la douille expansible (5) conjointement audit corps d'écartement (3), sachant que ledit tirant d'ancrage (1), exempt d'écrou vissé sur son filetage de fixation (4), est inséré dans le trou d'ancrage (7) par son filetage de fixation (4) en faisant saillie au-delà de la base d'ancrage (8) selon un débord (L) fermement établi, ledit débord (L) étant fermement établi à l'appui de l'épaisseur (D) d'une pièce rapportée (10), dans une région entourant le fût (2) du tirant d'ancrage lorsque ladite pièce rapportée (10) est fixée à la base d'ancrage (8) par ledit tirant d'ancrage (1) ; d'une épaisseur/d'épaisseurs d'éventuelles pièces supplémentaires (11) devant être, ou étant mises en place sur ledit fût (2) du tirant d'ancrage ; de la profondeur d'un trou borgne (15) d'un capuchon taraudé (12) devant être vissé sur le filetage de fixation (4) ; et d'une longueur d'expansion affectée au déploiement de la douille expansible (5), **caractérisé par** un outil (16 ; 20) de mise en place, comprenant un épaulement (18) mis en applique à côté du trou d'ancrage (7), lors de l'insertion du tirant d'ancrage (1) dans ledit trou d'ancrage (7) pratiqué dans la base d'ancrage (8), contre ladite base d'ancrage (8), contre une pièce rapportée (10) devant être fixée par ledit tirant d'ancrage (1) et adossée à ladite base d'ancrage (8), voire contre une ou plusieurs éventuelle(s) pièce(s) supplémentaire(s) (11) mise(s) en place sur le fût (2) dudit tirant d'ancrage, et une contre-butée (19) située à une distance dudit épaulement (18) qui correspond au débord (L).

2. Procédé selon la revendication 1, **caractérisé par le fait que** le débord (L) du filetage de fixation (4) du fût (2) du tirant d'ancrage, au-delà de la base d'ancrage (8), est au moins égal à l'épaisseur (D) d'une pièce rapportée (10), dans une région qui entoure ledit fût (2) du tirant d'ancrage lorsque ladite pièce rapportée (10) est fixée à la base d'ancrage (8) par ledit tirant d'ancrage (1), et à l'épaisseur/aux épaisseurs d'éventuelles pièces supplémentaires (11) devant être, ou étant mises en place sur ledit fût (2) du tirant d'ancrage, augmentée(s) d'un débord nécessaire à la venue en prise filetée du filetage (14) d'un capuchon taraudé (12) avec ledit filetage de fixation (4) du fût (2) du tirant d'ancrage.

3. Procédé selon la revendication 1 ou 2, **caractérisé par le fait que** le débord (L), au-delà de la base d'ancrage (8), d'une extrémité du fût (2) du tirant d'ancrage qui dépasse du trou d'ancrage (7), n'excède pas l'épaisseur (D) d'une pièce rapportée (10) dans une région entourant ledit fût (2) du tirant d'ancrage lorsque ladite pièce rapportée (10) est fixée à ladite base d'ancrage (8) par ledit tirant d'ancrage (1), augmentée de l'épaisseur/des épaisseurs d'éventuelles pièces supplémentaires (11) devant être, ou étant mises en place sur le fût (2) dudit tirant d'ancrage, et augmentée de la profondeur d'un trou borgne (15) d'un capuchon taraudé (12) devant être vissé sur le filetage de fixation (4) dudit fût (2) du tirant d'ancrage, déduction faite d'une longueur d'expansion nécessaire à l'ancrage dudit tirant d'ancrage (1).

4. Procédé selon l'une des revendications 1 à 3, **caractérisé par le fait que** l'outil (16) de mise en place est une bague dont une face extrême et dont l'autre face extrême matérialisent, respectivement, l'épaulement (18) et la contre-butée (19) ; et **par le fait que** le tirant d'ancrage (1) est inséré dans le trou d'ancrage (7) à l'aide d'un outil d'insertion (17), et qu'il est mis un terme à l'insertion par venue en applique dudit outil d'insertion (17) sur la contre-butée (19) dudit outil (16) de mise en place qui porte par son épaulement (18), au niveau de la base d'ancrage (8), contre une pièce rapportée (10) ou contre une pièce supplémentaire (11) mise en place sur le fût (2) dudit tirant d'ancrage (1).

5. Procédé selon l'une des revendications 1 à 3, **caractérisé par le fait que** l'outil (20) de mise en place revêt la forme d'une tige et est doté, dans une extrémité frontale, d'un chambrage (22) dont le diamètre est au moins égal à un diamètre extérieur du filetage de fixation (4) du tirant d'ancrage (1) ; dont la profondeur est égale au débord (L) dont ledit tirant d'ancrage (1) fait saillie au-delà de la base d'ancrage (8) au stade de la mise en place, déduction faite de l'épaisseur (D) de la pièce rapportée (10) dans une région entourant le fût (2) dudit tirant d'ancrage et déduction faite de l'épaisseur d'éventuelles pièces supplémentaires (11) mises en place sur ledit fût (2) du tirant d'ancrage ; et dont le fond forme la contre-butée (19) assignée audit tirant d'ancrage (1) ; et **par le fait que** l'extrémité frontale munie dudit chambrage (22) forme l'épaulement (18) dudit outil (20) de mise en place.

6. Procédé selon l'une des revendications 1 à 5, **caractérisé par le fait que** le tirant d'ancrage (1) est muni d'un capuchon taraudé (12) pouvant être vissé sur le filetage de fixation (4) dudit tirant d'ancrage (1).

7. Procédé selon la revendication 6, **caractérisé par le fait qu'**un trou borgne (15) du capuchon taraudé (12) est plus profond qu'un trou borgne d'un capuchon taraudé hexagonal de forme haute, conforme à la norme DIN 1587.

8. Procédé selon la revendication 7, **caractérisé par le fait qu'**un trou borgne (15) du capuchon taraudé (12) est plus profond d'au moins 50 %, notamment de 65 %, et préférentiellement de 80 %, qu'un diamètre nominal du filetage.

9. Procédé selon la revendication 7, **caractérisé par le fait que** la profondeur d'un trou borgne (15) du capuchon taraudé (12) est d'au moins 18 mm en présence d'un diamètre nominal de filetage M10, d'au moins 24 mm en présence d'un diamètre nominal de filetage M12, et d'au moins 27 mm en présence d'un diamètre nominal de filetage M16.
